(19) Europäisches Patentamt
European Patent Office
Office européen des brevets

(11) Veröffentlichungsnummer: **0 072 009**
**B1**

# (12) EUROPÄISCHE PATENTSCHRIFT

(45) Veröffentlichungstag der Patentschrift: **21.09.88**

(51) Int. Cl.⁴: **C 07 D 401/12**, C 08 K 5/34, C 07 F 7/04

(21) Anmeldenummer: **82107156.0**

(22) Anmeldetag: **07.08.82**

## (54) Polytriazinylalkohole, -ester und -urethane, ein Verfahren zu ihrer Herstellung und ihre Verwendung als Stabilisatoren.

(30) Priorität: **11.08.81 DE 3131684**

(43) Veröffentlichungstag der Anmeldung: **16.02.83 Patentblatt 83/7**

(45) Bekanntmachung des Hinweises auf die Patenterteilung: **21.09.88 Patentblatt 88/38**

(84) Benannte Vertragsstaaten: **AT BE CH DE FR GB IT LI NL SE**

(56) Entgegenhaltungen:
**EP-A-0 002 754**
**EP-A-0 014 683**
**EP-A-0 029 522**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Wiezer, Hartmut, Dr., Am Stocket 18, D-8901 Lützelburg (DE)**
Erfinder: **Pfahler, Gerhard, Dr., Karlsbader Strasse 27, D-8900 Ausburg (DE)**

EP 0 072 009 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Aus der Literatur sind zahlreiche Polyalkylpiperidinylaminotriazine bekannt, welche als Stabilisatoren für Polymere vorgeschlagen wurden, jedoch alle noch mit gewissen Mängeln behaftet sind. So befriedigen die produkte der DE-A-2 636 144 insbesondere im Hinblick auf die Fettmigration nicht, was sich z. B. in ihrer guten Heptanlöslichkeit zeigt, während die Verbindungen der EP-A-14 683 beträchtliche Mengen an niedermolekularen Anteilen enthalten, die ebenfalls die Heptanlöslichkeit erhöhen. In der EP-A-13 665 werden vernetzte Produkte beschrieben, welche bezüglich ihrer Wirksamkeit unzureichend sind, und aus der DE-A-3 111 209 sind schließlich hochmolekulare Triazinylester und -urethane bekannt, in denen entweder die Ester- bzw. die Urethangruppe einen Teil der Polymerkette bildet, oder bei denen die als Edukte verwendeten Monoalkohole nur einen Triazinylrest tragen. Diese produkte werden anwendungstechnisch als sehr gut beurteilt, sind jedoch, was ihre Migrationsfestigkeit betrifft, trotzdem noch nicht als optimal anzusehen.

Weiterhin sind s-Triazinderivate bekannt, die als Substituenten in 2-, 4- und 6-Stellung mindestens einen Polyalkylpiperidinrest und mindestens eine N-Methylolaminogruppe oder deren Äther tragen (vgl. EP-A-2754). Aufgrund der N-Methylolgruppe sollen sie mit vielen Kunststoffen eine chemische Bindung eingehen, was sie gegen Migration und Elution beständig machen soll.

Schließlich sind Bistriazinyldiamine, die im Molekül weitere Triazinringe seitlich an dem Grundgerüst tragen können, beschrieben worden (vgl. EP-A-29 522). Diese Verbindungen zeigen eine noch nicht ausreichend geringe Flüchtigkeit.

Ziel der vorliegenden Erfindung war es daher, Triazinderivate mit hohem Molekulargewicht in die Hand zu bekommen die sich von den bekannten Stabilisatoren, besonders bezüglich der Heptanlöslichkeit, was ein Indiz für die Fettmigration ist, positiv abheben.

Es wurde gefunden, daß diese Forderung weitgehend von Produkten erfüllt wird, die zusätzlich zu den Polyalkylpiperidylaminogruppen weitere polare Gruppen enthalten.

Die neuen Verbindungen entsprechen der allgemeinen Formel (I)

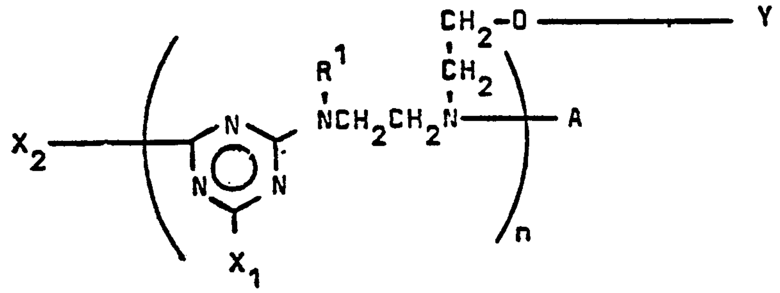 (I),

in welcher

n eine ganze Zahl von > 1 bis 100, vorzugsweise bis 20, insbesondere bis 10 ist.

X steht für Halogen, bevorzugt Chlor, Phenyl oder eine Gruppe der Formel (II), (III) oder (IV), vorzugsweise (II) oder (III) und insbesondere (II).

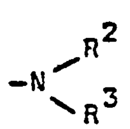 (II),

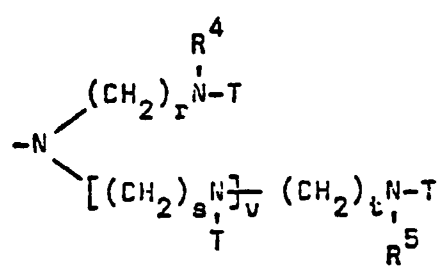 (III),

$-OR^6$ (IV)

In Formel (II) bedeutet

$R^2$ Wasserstoff, $C_1$- bis $C_{18}$-Alkyl, $C_5$- bis $C_{12}$-Cycloalkyl, das durch eine $C_1$- bis $C_4$-Alkylgruppe substituiert sein kann, $C_3$- bis $C_{12}$-Alkenyl, Phenyl, das durch ein oder zwei Cl, oder ein oder zwei $C_1$- bis $C_4$-Alkyl, oder durch $C_1$- bis $C_4$-Alkoxi, oder durch $C_1$- bis $C_2$-Carbalkoxi substituiert sein kann, oder $C_7$- bis $C_{14}$-, vorzugsweise $C_7$- bis $C_9$-Phenylalkyl, oder eine Gruppe der Formel (V)

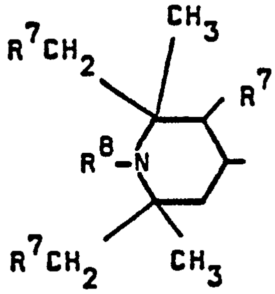

(V)

mit

$R^7$ = Wasserstoff oder Methyl, vorzugsweise Wasserstoff und

$R^8$ = Wasserstoff, $C_1$- bis $C_4$-Alkyl, das durch ein oder bei $C_3$-Alkyl auch durch zwei OH- substituiert sein kann, 2,3-Epoxipropyl, Allyl oder Benzyl, vorzugsweise jedoch Wasserstoff.

$R^3$ ist gleich oder verschieden von $R^2$ und hat die unter $R^2$ angegebenen Bedeutungen sowie zusätzlich die Bedeutung von $C_3$- bis $C_{21}$-Alkoxialkyl, vorzugsweise $C_1$- bis $C_{18}$-Alkoxipropyl, insbesondere $C_1$- bis $C_2$-Alkoxipropyl, oder von Dimethyl- oder Diethylamino-$C_2$- bis $C_5$-Alkyl.

$R^2$ und $R^3$ können ferner zusammen mit dem sie bindenden N-Atom für einen Pyrrolidin- oder einen unsubstituierten oder durch bis zu vier $C_1$- bis $C_4$-Alkylgruppen, vorzugsweise Methylgruppen, substituierten Piperidin-, Morpholin- oder Hexamethyleniminring stehen.

In Formel (III) bedeuten die Indices

r, s und t gleiche oder unterschiedliche ganze Zahlen von 2 bis 6, vorzugsweise 2 oder 3,

v eine ganze Zahl von 0 bis 3, vorzugsweise 0 oder 1 und insbesondere 0, und

$R^4$ und $R^5$ gleiche oder verschiedene Reste mit den unter $R^2$ angegebenen Bedeutungen, vorzugsweise Wasserstoff oder eine Gruppe der Formel (V) und insbesondere Wasserstoff.

T hat die Bedeutung einer Gruppe der Formel (VI)

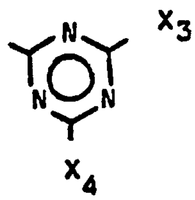

(VI)

mit

$X_3$ und $X_4$ = gleichen oder verschiedenen Restender Formel (II) oder (IV), vorzugsweise (II).

In Formel (IV) steht

$R^6$ für die unter $R^2$ angeführten Reste.

$R^1$ in Formel (I) bedeutet einen der unter $R^2$ aufgeführten Reste, vorzugsweise Wasserstoff, $C_1$ - bis $C_8$-Alkyl, $C_5$- bis $C_{12}$-Cycloalkyl oder die Gruppe der Formel (V), insbesondere jedoch Wasserstoff, oder die Gruppe der Formel (V).

Y ist Wasserstoff, eine $C_1$- bis $C_{18}$-aliphatische Acylgruppe, die durch -OH oder -Cl substituiert sein kann, ein $C_5$- bis $C_{12}$-, vorzugsweise $C_6$-alicyclischer Acylrest, der durch -OH oder $C_1$- bis $C_4$-Alkyl substituiert sein kann, ein $C_6$- oder $C_{10}$-aromatischer Acyl- oder Sulfonyl-Rest, der durch -OH, $C_1$- bis $C_4$- Alkoxi, Halogen, bevorzugt Chlor, oder $-NH_2$ substituiert sein kann, ein $C_7$- bis $C_{16}$- vorzugsweise $C_8$-araliphatischer Acylrest, der durch -OH und/oder 1 oder 2 $C_1$- bis $C_4$-Alkylgruppen substituiert sein kann, oder eine $C_1$- bis $C_{18}$-Alkyl-, $C_5$- bis $C_{12}$-, vorzugsweise $C_6$-Cycloalkyl- oder eine Phenyl- oder Naphthyl-Carbamoylgruppe, die durch Halogen, bevorzugt -Cl, oder $C_1$- bis $C_4$-Alkyl substituiert sein kann.

$X_2$ bedeutet als Endgruppe Halogen, bevorzugt Chlor oder ein Rest der Formeln

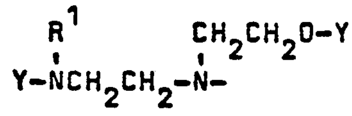 oder

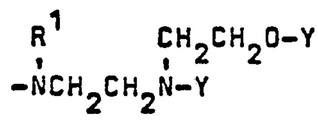 ,

in denen $R^1$ und Y die oben angegebenen Bedeutungen haben, und

A als Endgruppe H oder Y mit den oben angegebenen Bedeutungen.

In Formel (I) muß mindestens ein Rest der Formel (V) enthalten sein.

Die neuen Verbindungen werden, ausgehend vom Cyanurhalogenid, bevorzugt Cyanurchlorid, gemäß folgenden Verfahrensschritten erhalten.

Die einzelnen Verfahrensschritte können unter Isolierung der Zwischenprodukte durchgeführt oder ohne Isolierung derselben nach siner "Eintopfvariante" vollzogen werden.

Im einzelnen geht man wie folgt vor:

Nach Verfahrensschritt A wird Cyanurhalogenid mit der 0,95- bis 1,05-fach-, vorzugsweise der 1,0-fach molaren Menge einer Verbindung der Formel $H\text{-}X_1$ umgesetzt.

Diese Produkte reagieren gemäß Verfahrensschritt B bei 50 bis 200°C mit der 0,95- bis 1,05-fach-, vorzugsweise der 1,0-fach molaren Menge einer Verbindung der Formel (VII)

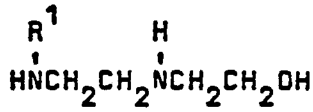 (VII),

zu den erfindungsgemäßen Triazinen (Ia),

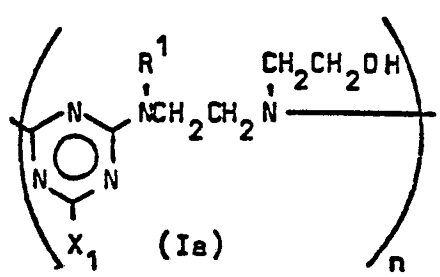

(Ia)

zu welchen man aber auch durch Umsetzen von Cyanurhalogenid mit der 0,95- bis 1,05-fach-, vorzugsweise der 1,0-fach molaren Menge der Verbindung (VII) (Verfahrensschritt C) und Kondensation der so erhaltenen Produkte mit der 0,95- bis 1,05-fach-, vorzugsweise der 1,0-fach valenten Menge einer Verbindung der Formel $H\text{-}X_1$ gelangen kann.

Bei all den Umsetzungen, die die Substitution von Halogen betreffen, wird in Gegenwart äquivalenter Mengen eines Halogenwasserstoffacceptors gearbeitet.

Aus den erfindungsgemäßen, bereits gut stabilisierenden Verbindungen (Ia) werden, falls gewünscht, durch Reaktion mit der, bezogen auf OH-Gruppen, äquivalenten Menge eines Isocyanats oder Esters die Ester und Urethane der Formel (I) erhalten.

Die Reaktionen werden in inerten organischen Lösungsmitteln wie z. B. Aceton, Benzol, Toluol, Xylol, Mesitylen oder Gemischen derselben vorgenommen.

Der Verfahrensschritt A wird bei -5 bis 40°C, vorzugsweise -5 bis 20 und insbesondere 0 bis 10°C und der Verfahrensschritt C bei -5 bis 70, vorzugsweise -5 bis 20°C für die Substitution des ersten Halogenatoms und 30 bis 70°C für die des zweiten Halogenatoms, insbesondere 0 bis 10 für die des ersten und 40 bis 70°C für die des zweiten Halogenatoms durchgeführt.

Die Umsetzungen mit Estern und Isocyanaten verlangen Temperaturen von 90 bis 180, vorzugsweise 100 bis 180 und insbesondere bei Umesterungen 130 bis 180°C.

Bei der Herstellung der neuen Verbindungen setzt man in den Umsetzungen als Halogenwasserstoffakzeptoren äquivalente Mengen anorganischer Basen zu. Geeignet sind z. B. Natriumhydroxid, Kaliumhydroxid, Natriumcarbonat und Kaliumcarbonat in fester Form oder in wäßriger

Lösung.

Will man Isocyanate mit (Ia) umsetzen, so wird die Reaktion durch 0,1 bis 2 Gew.-%, bezogen auf (Ia), einer Base wie z. B. 1,4-Diazabicyclo-[2.2.2]-octan oder KOH katalysiert. Die Umesterungen verlangen starke Basen wie z. B. NaH, $LiNH_2$ oder Alkalimetallalkoholate als Katalysatoren.

Beispiele für Ausgangssubstanzen der Formeln $H\text{-}X_1$ und $H\text{-}X_2$, welche identisch sind mit den durch H abgesättigten Radikalen der Formeln (II), (III) und (IV), sind:

1 Ammoniak
2 Methylamin
3 Butylamin
4 Hexylamin
5 Dodecylamin
6 2-Ethyl-hexylamin
7 Octadecylamin
8 Cyclohexylamin
9 Benzylamin
10 3-Methoxipropylamin
11 3-Octadecyloxipropylamin
12 3-Dimethylaminopropylamin
13 Diethylamin
14 Dibutylamin
15 Dicyclohexylamin
16 Dioctadecylamin
17 Piperidin
18 Morpholin
19 2-Aminoethanol
20 3-Aminopropanol
21 Methanol
22 Ethanol
23 2,2,6,6-Tetramethyl-4-amino-piperidin
24 2,2,6,6-Tetramethyl-4-butylamino-piperidin
25 2,2,6,6-Tetramethyl-4-octadecylamino-piperidin
26 2,2,6,6-Tetramethyl-4-(3-methoxi)-propylamino-piperidin
27 2,2,6,6-Tetramethyl-4-(3-dimethylamino)-propylamino-piperidin
28 N-(2,2,6,6-Tetramethyl-4-piperidyl)-3-ethoxipropylamin
29 2,2,6,6-Tetramethyl-4-piperidylamino-propanol-3
30 N-(2,2,6,6-Tetramethyl-4-piperidyl)-cyclododecylamin
31 N-(2,2,6,6-Tetramethyl-4-piperidyl)-hexylamin
32 2,2,6,6-Tetramethylpiperidinol-4
33 Di-(2,2,6,6-Tetramethyl-4-piperidinyl)-amin
34 1,9-Bis-[2,4-bis-<N-(2,2,6,6-tetramethyl-4-piperidinyl)-3-methoxipropylamino>-1,3,5-triazin-6-yl]-1,5,9-triazanonan
35 1,7-Bis-[2,4-bis-<N-(2,2,6,6-tetramethyl-4-piperidinyl)-3-methoxipropylamino>-1,3,5-triazin-6-yl]-1,4,7-triazaheptan
36 1,5,12-Tris-[2,4-bis-<N-(2,2,6,6-tetramethyl-4-piperidinyl)-3-methoxipropylamino>-1,3,5-triazin-6-yl]-1,5,8,12-tetraazadodecan

Beispiels für Verbindungen der Formel

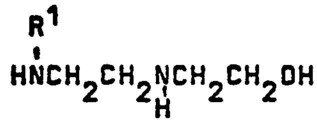

sind:

37 N-[(2-Aminoethyl)-amino]-ethanol
38 N-{[2-<N-(2,2,6,6-tetramethyl-4-piperidinyl)>-aminoethyl]-amino}-ethanol
39 N-[<2-(N'-Butyl)-aminoethyl>-amino]-ethanol
40 N-[<2-(N'-Cyclohexyl)-aminoethyl>-amino]-ethanol

Beispiele für Isocyanate und Ester, die mit Verbindungen der Formel (Ia) umgesetzt werden können, sind:

41 Methylisocyanat
42 Butylisocyanat
43 Octadecylisocyanat
44 Cyclohexylisocyanat
45 Caprylsäuremethylester
46 Buttersäuremethylester
47 Essigsäureethylester
48 Methacrylsäuremethylester

Die neuen Verbindungen unterscheiden sich von den bekannten Triazinylamin-Stabilisatoren sowohl strukturell als auch in ihren Eigenschaften in mehrfacher Hinsicht. So sind die in der Patentliteratur beschriebenen oligomeren Triazinylamine (z. B. DE-C-2 636 144, DE-A-2 933 078 und 3 022 896; Europ. Patentanmeldung 13 665) an den die Triazinbausteine verknüpfenden Diaminokomponenten nicht durch Hydroxialkyl-, Ester- oder Urethangruppen substituiert, während die aus der DE-A-3 111 209 bekannten hochmolekularen Triazinylverbindungen zwar Ester- bzw. Urethangruppen enthalten, diese jedoch einen Teil der Polymerkette bilden oder die als Edukte verwendeten Monoalkohole nur einen Triazinylrest besitzen.

Gegenüber der Gruppe der oligomeren Triazinylamin-Stabilisatoren zeichnen sich die neuen Produkte insbesondere durch ihre geringere Heptanlöslichkeit aus, was auf eine niedrige Fettlöslichkeit, d. h. eine hohe Migrationsfestigkeit, schließen läßt. Dies war nicht zu erwarten und muß als überraschend angesehen werden.

Des weiteren war, besonders verglichen mit den Produkten des nächsten Standes der Technik, nämlich denen der DE-A-3 111 209, und der EP-A-29 522 nicht mit einer geringeren Flüchtigkeit bei längerer Temperaturbeanspruchung und besseren Wirksamkeit zu rechnen. Wegen des ähnlichen Aufbaus mußte vielmehr eine vergleichbare Stabilisatoreignung erwartet werden. Besonders überraschend ist schließlich, daß auch die unter den neuen produkten, in denen Y = H ist, trotz der hohen Anzahl von OH-Gruppen ausgezeichnet migrationsfest gegen wäßrige Medien sind.

Die neuen Triazinstabilisatoren lassen sich problemlos in die zu stabilisierenden Polymeren einarbeiten und sind hervorragend zum Stabilisieren derselben gegen den lichtinduzierten oxidativen Abbau geeignet. Als weitere hervorzuhebende Eigenschaften seien die Verträglichkeit auch mit unpolaren Kunststoffen trotz ihres polaren Charakters sowie die bereits angesprochene Migrationsfestigkeit gegen das Auswaschen mit Wasser, die Heptanschwerlöslichkeit im Hinblick auf die Fettmigration und die geringe Flüchtigkeit im Vergleich zu den Stabilisatoren der DE-A-3 111 209 genannt.

Die neuen Verbindungen werden - wie mehrfach ausgeführt - als Stabilisatoren für synthetische Polymere gegen deren Schädigung durch Einwirkung von Sauerstoff, Wärme und Licht verwendet. Beispiele für solche Kunststoffe und Stabilisierbeispiele sind in der DE-A-3 113 455, Seiten 19 bis 24, bzw. der DE-A-3 111 209, Seiten 23 bis 28, aufgeführt. Bevorzugt sind Polyolefine, Polyacrylate und Methacrylate und Homo- und Copolymerisate des Styrols, insbesondere die erstgenannten.

Der Stabilisator wird im allgemeinen in Mengen von 0,01 bis 5 Gewichtsteilen, bezogen auf das Polymere, gegebenenfalls neben bisher bekannten Stabilisatoren und Zusätzen, wie sie in der DE-A-3 111 209 auf den Seiten 26 bis 28 beschrieben sind, eingesetzt.

Die folgenden Beispiele dienen der weiteren Erläuterung der Erfindung.

In den folgenden Herstellungsbeispielen sind die eingesetzten Ausgangsstoffe, sofern nicht namentlich genannt, durch Ziffern gekennzeichnet, die sich auf die Numerierung der vorher aufgelisteten Substanzen beziehen. Da es sich bei den Verfahrensprodukten um Harze handelt, sind die Angaben über die Schmelzpunkte "Ungefähr"-Werte.

**Beispiel 1**

In einer 250 ml-Rührapparatur wurden 26,0 g (0,069 Mol) 2,4-Dichlor-6-<N-(2,2,6,6,-tetramethyl-4-piperidinyl)-3-methoxi-propan-1-amino>-1,3,5,triazin, hergestellt aus Cyanurchlorid und 2,2,6,6,-Tetramethyl-4-(3-methoxy)-propylamino-piperidin (Verbindung Nr. 26), 7,2 g (0,069 Mol) der Verbindung Nr. 37 und 5,5 g (0,138 Mol) NaOH-Pulver in 100 ml Xylol 24 h am Rückfluß gekockt. Anschließend wurde heiß filtriert und das Filtrat im Vakuum bis zur Trockene eingeengt. Es blieb ein farbloses festes Harz zurück.

26,5 g = 94,4 % d. Th.; Fp ~ 125°C.

**Beispiele 2 bis 5**

Analog wurden dis folgenden Produkte hergestellt:

| Bsp. Nr. | Edukt 1 Verb. aus Cyanurchlorid u. V.Nr. | Edukt 2 Verb. Nr. | Fp (°C) des Verfahrensprod. |
|---|---|---|---|
| 2 | 24 | 37 | 169 - 91 |
| 3 | 28 | 37 | 183 - 92 |
| 4 + | 24 | 38 | 145 - 90 |
| 5 | 27 | 37 | 94 - 105 |

+ = Reaktionsmedium Mesitylen bei 160°C.

**Beispiel 6**

In einer Rührapparatur wurden 12,6 g (0,03 OH-Äquivalente) der Verbindung nach Beispiel 3 mit Toluol und 1,4-Diaza-bicyclo-(2,2,2)-octan als Katalysator vorgelegt, worauf man bei 50°C 3,8 g (0,03 mol) der Verbindung Nr. 44 zutropfte und das Reaktionsgemisch 20 Stunden bei Rückflußtemperatur rührte. Anschließend wurde im Vakuum zur Trockene eingeengt.

15,7 g eines Harzes vom Fp. ca. 200°C.

**Beispiel 7**

In 100 ml wasserfreiem Mesitylen wurden die Verbindung nach Beispiel 3 und die Verbindung Nr. 47 unter Zugabe von $LiNH_2$ auf 160°C erhitzt, wobei innerhalb von 10 Stunden Ethanol abdestillierten. Die Lösung wurde mittels Bleicherde und Aktivkohle entfärbt und im Vakuum zur Trockene eingeengt.

Produkt: ein Harzes vom Fp. ca. 130°C.

**Beispiel 8**

Dieses Beispiel zeigt die Flüchtigkeit der neuen Triazinstabilisatoren im Vergleich zu einem Produkt des nächsten Standes der Technik.

Die Flüchtigkeiten wurden in einer Apparatur zur thermogravimetriachen Analyse bestimmt. Gleiche Menge (500 mg) der erfindungsgemäßen Verbindungen und der Vergleichssubstanz wurden dazu in Stickstoffatmosphäre mit einer Aufheizgeschwindigkeit von 2 K/min. bis auf 300°C erhitzt und der Substanzverlust in $mg/cm^2$ Probenoberfläche gemessen. Die Ergebnisse zeigt nachstehende Tabelle:

| Stabilisator gem. Bsp. | Gewichtsverlust in $mg/cm^2$ beim Erreichen von ...°C 220 | 260 | 300 | 10 min bei 300°C | 30 min bei 300°C |
|---|---|---|---|---|---|
| Vergleich[1)] | 0,32 | 1,11 | 9,48 | 58,46 | 118,5 |
| Vergleich[2)] | 0,79 | 2,69 | 5,01 | 9,48 | 22,1 |
| 2 | 0,47 | 1,58 | 8,05 | 8,69 | 12,6 |
| 1 | 0,0 | 1,26 | 3,00 | 5,37 | 9,3 |

[1)] Verbindung nach Beispiel 1 der DE-A-2 719 131
[2)] Verbindung nach Beispiel 2 der DE-A-3 111 209

**Beispiel 9**

Eine in einem Laborschnellmischer hergestellte Mischung aus

| | | |
|---|---|---|
| 100 | Gew.-T. | Polypropylen (® Hostalen PPU VP 1770 F der Hoechst AG vom Schmelzindex MFI 190/5 = 1,9 g/10 min, bestimmt nach DIN 53 535), |
| 0,2 | Gew.-T. | Calciumstearat, |
| 0,1 | Gew.-T. | Pentaerythrityl-tetrakis-3-(3,5-di-tert.-butyl-4-hydroxiphenyl)-propionat und |
| 0,3 | Gew.-T. | des zu prüfenden Stabilisators |

wird zu Granulat verarbeitet. Das derart stabilisierte Material schmilzt man sodann in einem Laborextruder unter den üblichen Verarbeitungsbedingungen auf und verspinnt es über eine Spinnpumpe mit Achtfachspinnkopf zu Monofilamenten. Diese werden anschließend im Verhältnis 1 : 3 nachverstreckt und zu Garn von 40 dtex texturiert, welches man zu Prüfgeweben verarbeitet.

Die Gewebeproben werden auf einen gelochten Karton so aufgespannt, daß eine freie Öffnung von ca. 15,5 mm Durchmesser bestehen bleibt und in dieser Form in einer Xenotest X 1200-Apparatur der Firma Original Hanau Quarzlampen GmbH einer Bestrahlung mit Wechsellicht unterworfen. Hierbei wird die Strahlungsintensität durch UV-Filter (Spezialfilterglas d = 1,7 mm) moduliert und die Prüfmethode nach DIN 53 387 (17 min. Trockenperiode, 3 min. beregnen, Schwarztafeltemperatur 45° C, relative Luftfeuchtigkeit während der Trockenperiode 70 bis 75 %) angewandt. In bestimmten Zeitabständen werden die Gewebe zentrisch mit einem Gewicht von 6 mm Durchmesser und einem Druck von 0,1 N/mm² belastet. Als Versagenstermin gilt das Durchbrechen des Gewichts.

| Stabilisator nach Beispiel | Belichtungszeit in Stunden |
|---|---|
| Polypropylen | <280 |
| Vergleich[1] | 1400 |
| Vergleich[2] | 3100 |
| Vergleich[3] | 400 |
| 4 | >3100[4] |

[1] Verbindung nach Beispiel 1 der DE-A-2 719 131
[2] Verbindung nach Beispiel 2 der DE-A-3 111 209
[3] ohne Stabilisator
[4] Gewicht noch nicht durchgebrochen

**Beispiel 10**

Das wie im vorhergehenden Beispiel hergestellte stabilisierte Granulat wird auf einer Labor-Folienblasenlege (Schneckendurchmesser 25 mm, Länge 20 D), Tempereturprogramm 200, 240, 250, 255° C) zu Blasfolien von ca. 70 µm Dicke verarbeitet. Diese Folien werden im Xenotest X 1200-Gerät wie in Beispiel 27 beschrieben, künstlich bewittert. Als Schädigungsmerkmal wird die Carbonylzahl in Anlehnung an DIN 63 383, Teil 2, gemessen (Diese wird für PP definiert als Verhältnis der Extinktionen bei 1715 $cm^{-1}$ und 1524 $cm^{-1}$).

| Stabilisator nach Beispiel | C=0-Zahl nach ... Stunden 500 | 1000 | 2000 | 2500 |
|---|---|---|---|---|
| Popypropylen | >2 | | | |
| Vergleich[1] | | >2 | | |
| Vergleich[2] | 0,1 | <0,1 | 0,4 | 0,9 |
| Vergleich[3] | >2 | | | |
| 4 | <0,1 | <0,1 | 0,3 | 0,6 |

[1], [2], [3] entsprechen den Vergleichsproben des Beispiels 9

**Beispiel 11**

Zur Bestimmung der Löslichkeit, die einen Maßstab für die Migrationsfestigkeit darstellt, wurden je 1 g des zu untersuchenden Stabilisators in 9 g Heptan bei 25°C 10 min. verrührt. Der unlösliche Anteil wurde abfiltriert, getrocknet und gewogen.

| Stabilisator nach Beispiel | Löslichkeit in % bei 25° C |
|---|---|
| 2 | 0 |
| 3 | 0 |
| 4 | 10 |
| 5 | 0 |
| Vergleich1) | 100 |
| Vergleich2) | 80 |

1) Stabilisator nach Beispiel 6 der DE-A-2 636 144
2) Stabilisator nach Beispiel 2 der DE-A-3 111 209

**Patentansprüche** für die Vertragsstaaten: BE, CH, DE, FR, GB, IT, LI, NL, SE

1. Polytriazinylverbindungen der Formel (I)

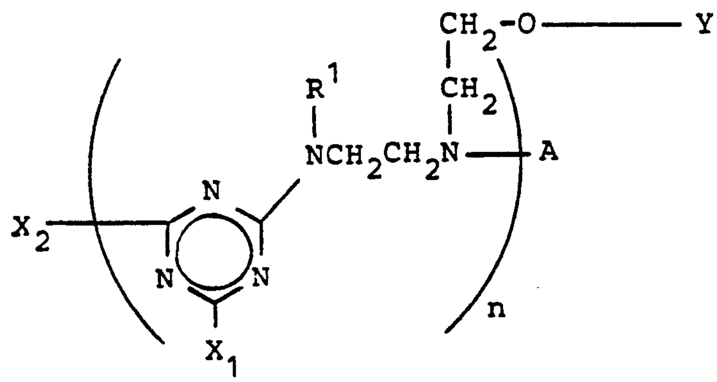

(I)

in welcher

n eine ganze Zahl von > 1 bis 100 ist und

$X_1$ für Halogen, Phenyl oder eine Gruppe der Formel (II), (III) oder (IV)

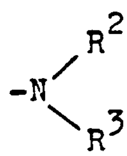

(II),

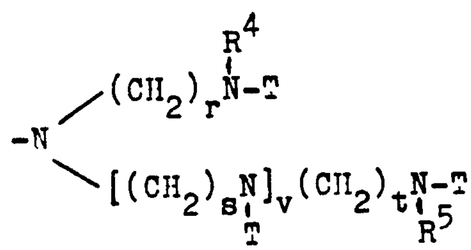

(III)

$-OR^6$ (IV)

steht, wobei in diesen Formeln

$R^2$ Wasserstoff, $C_1$- bis $C_{18}$- Alkyl, $C_5$- bis $C_{12}$-Cycloalkyl, das durch eine $C_1$- bis $C_4$-Alkylgruppe substituiert sein kann, $C_3$- bis $C_{12}$-Alkenyl, Phenyl, das durch ein oder zwei Cl, oder ein oder zwei $C_1$- bis $C_4$-Alkylgruppen, oder $C_1$- bis $C_4$-Alkoxi, oder $C_1$- bis $C_2$-Carbalkoxi substituiert sein kann, oder $C_7$- bis $C_{14}$-Phenylalkyl, oder eine Gruppe der Formel (V)

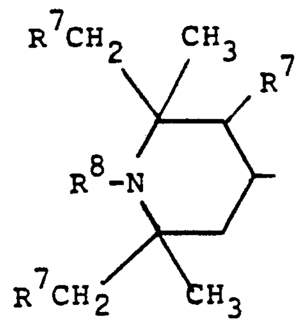

(V)

mit

| | |
|---|---|
| $R^7$ | = Wasserstoff oder Methyl und |
| $R^8$ | = Wasserstoff $C_1$- bis $C_4$-Alkyl, das durch ein oder bei $C_3$-Alkyl auch durch zwei OH substituiert sein kann, 2,3-Epoxipropyl, Allyl oder Benzyl, |
| $R^3$ | gleich oder verschieden von $R^2$ ist und die unter $R^2$ angegebenen Bedeutungen hat, sowie zusätzlich für $C_3$- bis $C_{21}$-Alkoxialkyl oder für Dimethyl- oder Diethylamino-$C_2$- bis $C_5$-alkyl steht, oder |
| $R^2$ und $R^3$ | zusammen mit dem sie bindenden N-Atom für einen Pyrrolidin- oder einen unsubstituierten oder durch bis zu vier $C_1$- bis $C_4$-Alkylgruppen substituierten Piperidin-, Morpholin- oder Hexamethyleniminring stehen, |
| r, s und t | gleiche oder verschiedene ganze Zahlen von 2 bis 6 und |
| v | von 0 bis 3 darstellen, |
| $R^4$ und $R^5$ | gleiche oder unterschiedliche Reste mit den unter $R^2$ angegebenen Bedeutungen sind, und |
| T | eine Gruppe der Formel (VI) ist |

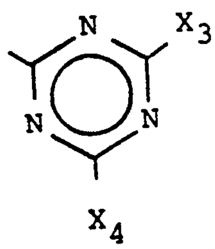

(VI)

mit

| | |
|---|---|
| $X_3$ und $X_4$ | = gleiche oder verschiedene Reste der Formeln (II) oder (IV) und |
| $R^6$ | für einen der unter $R^2$ aufgeführten Reste steht, |
| $R^1$ | die Bedeutung eines der unter $R^2$ aufgeführten Reste hat, |
| Y | Wasserstoff, eine $C_1$- bis $C_{18}$-aliphatische Acylgruppe, die durch -OH oder -Cl substituiert sein kann, ein $C_5$- bis $C_{12}$-alicyclischer Acylrest, der durch -OH oder $C_1$- bis $C_4$-Alkyl substituiert sein kann, ein $C_6$- oder $C_{10}$-aromatischer Acyl- oder Sulfonylrest, der durch -OH, $C_1$- bis $C_4$-Alkoxi, Halogen oder $-NH_2$ substituiert sein kann, ein $C_7$- bis $C_{16}$-araliphatischer Acylrest, der durch -OH und/oder 1 oder 2 $C_1$- bis $C_4$-Alkylgruppen substituiert sein kann, oder eine $C_1$- bis $C_{18}$-Alkyl-, $C_5$- bis $C_{12}$-Cycloalkyl- oder eine Phenyl- oder Naphthyl-Carbamoylgruppe, die durch Halogen oder $C_1$- bis $C_4$-Alkyl substituiert sein kann, ist, und |
| $X_2$ | als Endgruppe Halogen oder ein Rest der Formeln |

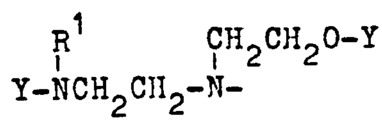

oder

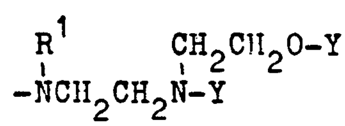

,

in denen $R^1$ und Y die oben angegebenen Bedeutungen haben, und

A als Endgruppe H oder Y mit den oben angegebenen Bedeutungen sind,

und in der Formel (I) mindestens ein Rest der Formel (V) enthalten sein muß.

2. Verfahren zur Herstellung der Polytriazinylverbindungen der Formel (I) in Anspruch 1, dadurch

gekennzeichnet, daß man bei Anwesenheit eines inerten organischen Lösungsmittels entweder

A. in einem Verfahrensschritt A Cyanurhelogenid mit der 0,95- bis 1,05-fach molaren Menge einer Verbindung der Formel H-$X_1$, in der $X_1$ die in Anspruch 1 angegebene Bedeutung, jedoch nicht Halogen oder Phenyl, hat, bei -5 bis 40 °C zu einer Verbindung der Formel

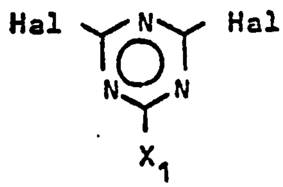

umsetzt,

B. die nach Verfahrensschritt A erhaltenen Produkte in einem Verfahrensschritt B bei 50 bis 200°C mit der 0,95- bis 2,05-fach molaren Menge einer Verbindung der Formel VII

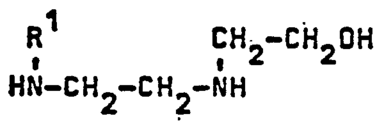

(VII)

zu einem Produkt der Formel (Ia) polykondensiert

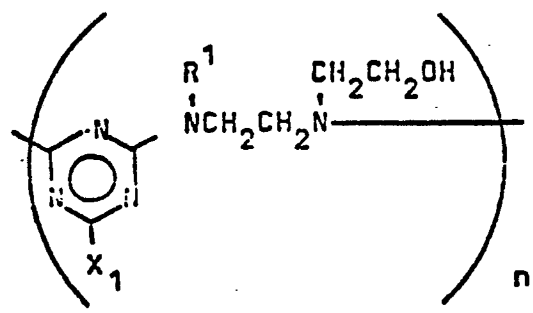

(Ia)

- wobei man bei all den Umsetzungen, die die Substitution von Halogen betreffen, in Gegenwart äquivalenter Mengen eines Halogenwasserstoffacceptors arbeitet - und man sodann, sofern gewünscht, die nach A bzw. B erhaltenen Verbindungen (Ia) mit der ihren freien OH-Gruppen äquivalenten Menge eines Isocyanats oder Esters nach an sich bekannten Methoden derivatisiert.

3. Verwendung der Verbindungen gemäß Anspruch 1 zum Stabilisieren von synthetischen Polymeren.

4. Verwendung nach Anspruch 3, dadurch gekennzeichnet, daß das Polymere ein Polyolefin, ein Polyacrylat oder Polymethacrylat oder ein Homo- oder Copolymerisat des Styrols ist.

5. Verfahren zum Stabilisieren von synthetischen Polymeren gegen den schädigenden Einfluß von Licht, dadurch gekennzeichnet, daß man den Polymeren, gegebenenfalls neben bisher bekannten, stabilisierend wirkenden Stoffen, 0,01 bis 5 Gewichtsteile, bezogen auf Polymeres, eines Stabilisators nach Anspruch 1 zusetzt.

6. Gegen UV-Zersetzung stabilisierte, synthetische Polymere, in denen 0,01 bis 5 Gewichtsteile, bezogen auf Polymeres, eines Stabilisators nach Anspruch 1 enthalten sind.

**Patentansprüche** für den Vertragsstaat: AT

1. Verfahren zur Herstellung von Polytriazinylverbindungen der Formel (I)

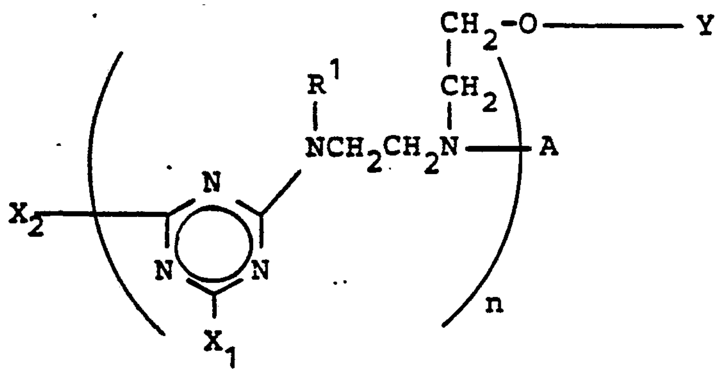

(I)

in welcher

n eine ganze Zahl von > 1 bis 100 ist und

$X_1$ für Halogen, Phenyl oder eine Gruppe der Formel (II), (III) oder (IV)

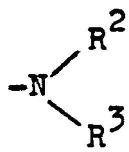

(II),

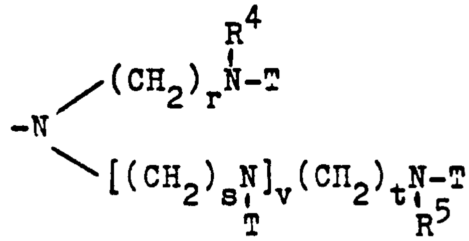

(III)

$-OR^6$ (IV)

steht, wobei in diesen Formeln

$R^2$ Wasserstoff, $C_1$- bis $C_{18}$- Alkyl, $C_5$- bis $C_{12}$-Cycloalkyl, das durch eine $C_1$- bis $C_4$-Alkylgruppe substituiert sein kann, $C_3$- bis $C_{12}$-Alkenyl, Phenyl, das durch ein oder zwei Cl, oder ein oder zwei $C_1$- bis $C_4$-Alkylgruppen, oder $C_1$- bis $C_4$-Alkoxi, oder $C_1$- bis $C_2$-Carbalkoxi substituiert sein kann, oder $C_7$- bis $C_{14}$-Phenylalkyl, oder eine Gruppe der Formel (V)

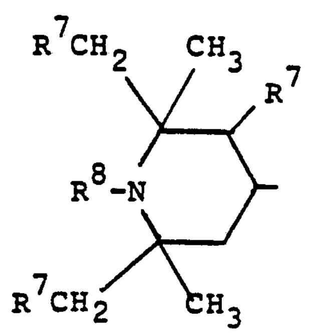

(V)

mit

$R^7$ = Wasserstoff oder Methyl und

$R^8$ = Wasserstoff $C_1$- bis $C_4$-Alkyl, das durch ein oder bei $C_3$-Alkyl auch durch zwei OH substituiert sein kann, 2,3-Epoxipropyl, Allyl oder Benzyl,

$R^3$ gleich oder verschieden von $R^2$ ist und die unter $R^2$ angegebenen Bedeutungen hat, sowie zusätzlich für $C_3$- bis $C_{21}$-Alkoxialkyl oder für Dimethyl- oder Diethylamino-$C_2$- bis $C_5$-alkyl steht, oder

$R^2$ und $R^3$ zusammen mit dem sie bindenden N-Atom für einen Pyrrolidin- oder einen unsubstituierten oder durch bis zu vier $C_1$- bis $C_4$-Alkylgruppen substituierten Piperidin-, Morpholin- oder Hexamethyleniminring stehen,

r, s und t gleiche oder verschiedene ganze Zahlen von 2 bis 6 und

v von 0 bis 3 darstellen,

$R^4$ und $R^5$ gleiche oder unterschiedliche Reste mit den unter $R^2$ angegebenen Bedeutungen sind, und

T eine Gruppe der Formel (VI) ist

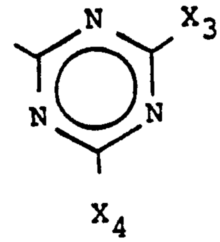

(VI)

mit

$X_3$ und $X_4$ = gleiche oder verschiedene Reste der Formeln (II) oder (IV) und

$R^6$ für einen der unter $R^2$ aufgeführten Reste steht,

$R^1$ die Bedeutung eines der unter $R^2$ aufgeführten Reste hat,

Y Wasserstoff, eine $C_1$- bis $C_{18}$-aliphatische Acylgruppe, die durch -OH oder -Cl substituiert sein kann, ein $C_5$- bis $C_{12}$-alicyclischer Acylrest, der durch -OH oder $C_1$- bis $C_4$-Alkyl substituiert sein kann, ein $C_6$- oder $C_{10}$-aromatischer Acyl- oder Sulfonylrest, der durch -OH, $C_1$- bis $C_4$-Alkoxi, Halogen oder $-NH_2$ substituiert sein kann, ein $C_7$- bis $C_{16}$-araliphatischer Acylrest, der durch -OH und/oder 1 oder 2 $C_1$- bis $C_4$-Alkylgruppen substituiert sein kann, oder eine $C_1$- bis $C_{18}$-Alkyl-, $C_5$- bis $C_{12}$-Cycloalkyl- oder eine Phenyl- oder Naphthyl-Carbamoylgruppe, die durch Halogen oder $C_1$- bis $C_4$-Alkyl substituiert sein kann, ist, und

$X_2$ als Endgruppe Halogen oder ein Rest der Formeln

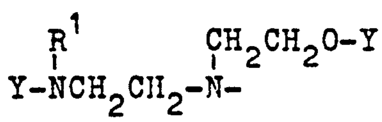

oder

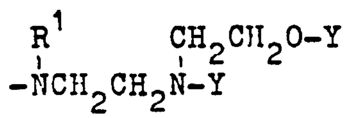

,

in denen $R^1$ und Y die oben angegebenen Bedeutungen haben, und

A als Endgruppe H oder Y mit den oben angegebenen Bedeutungen sind,

und in der Formel (I) mindestens ein Rest der Formel (V) enthalten sein muß,

dadurch gekennzeichnet, daß man bei Anwesenheit eines inerten organischen Lösungsmittels entweder

A. in einem Verfahrensschritt A Cyanurhelogenid mit der 0,95- bis 1,05-fach molaren Menge einer Verbindung der Formel $H-X_1$, in der $X_1$ die in Anspruch 1 angegebene Bedeutung, jedoch nicht Halogen oder phenyl, hat, bei -5 bis 40 °C zu einer Verbindung der Formel

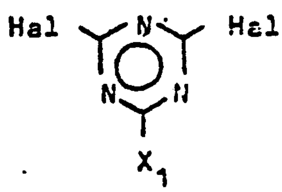

umsetzt,

B. die nach Verfahrensschritt A erhaltenen Produkte in einem Verfahrensschritt B bei 50 bis 200°C mit der 0,95- bis 2,05-fach molaren Menge einer Verbindung der Formel VII

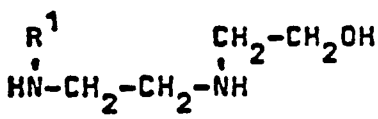

(VII),

zu einem Produkt der Formel (Ia) polykondensiert

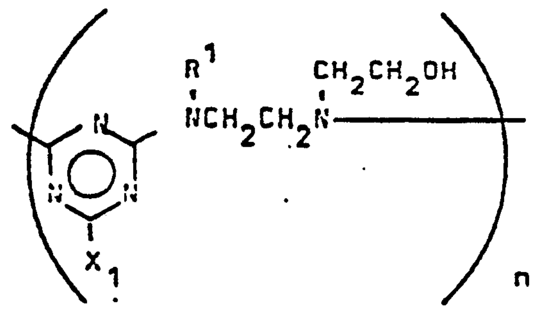

(Ia)

- wobei man bei all den Umsetzungen, die die Substitution von Halogen betreffen, in Gegenwart äquivalenter Mengen eines Halogenwasserstoffacceptors arbeitet - und man sodann, sofern gewünscht, die nach A bzw. B erhaltenen Verbindungen (Ia) mit der ihren freien OH-Gruppen äquivalenten Menge eines Isocyanats oder Esters nach an sich bekannten Methoden derivatisiert.

2. Verwendung der gemäß Anspruch 1 hergestellten Verbindungen zum Stabilisieren von synthetischen Polymeren.

3. Verwendung nach Anspruch 2, dadurch gekennzeichnet, daß das Polymere ein Polyolefin, ein Polyacrylat oder Polymethacrylat oder ein Homo- oder Copolymerisat des Styrols ist.

4. Verfahren zum Stabilisieren von synthetischen Polymeren gegen den schädigenden Einfluß von Licht, dadurch gekennzeichnet, daß man den Polymeren, gegebenenfalls neben bisher bekannten, stabilisierend wirkenden Stoffen, 0,01 bis 5 Gewichtsteile, bezogen auf Polymeres, eines nach Anspruch 1 hergestellten Stabilisators zusetzt.

5. Gegen UV-Zersetzung stabilisierte, synthetische Polymere, in denen 0,01 bis 5 Gewichtsteile, bezogen auf Polymeres, eines nach Anspruch 1 hergestellten Stabilisators enthalten sind.

**Claims** for the Contracting States: BE, CH, DE, FR, GB, IT, LI, NL, SE

1. A polytriazinyl compound of the formula (I)

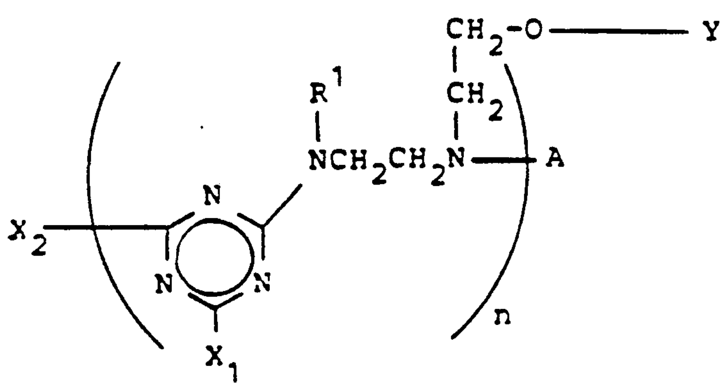

(I)

in which
n is an integer from > 1 to 100 and
$X_1$ represents halogen phenyl or a group of the formula (II), (III) or (IV)

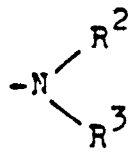 (II), 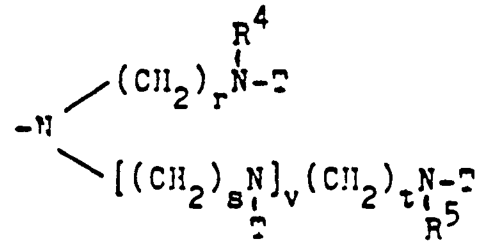

(III)

$-OR^6$ (IV)

in which formulae
$R^2$ is hydrogen, $C_1$- to $C_{18}$-alkyl, $C_5$- to $C_{12}$-cycloalkyl which can be substituted by a $C_1$- to $C_4$-alkyl group, $C_3$- to $C_{12}$-alkenyl, or phenyl which can be substituted by one or two Cl or by one or two $C_1$- to $C_4$-alkyl groups or by $C_1$- to $C_4$-alkoxy or $C_1$- to $C_2$-carboalkoxy, or is $C_7$- to $C_{14}$-phenylalkyl or a group of the formula (V)

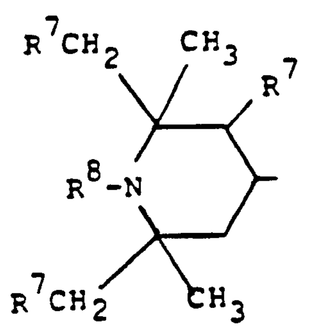

(V)

in which $R^7$ = hydrogen or methyl and
$R^8$ = hydrogen, $C_1$- to $C_4$-alkyl which can be substituted by one OH group or, in the case of $C_3$-alkyl, can also be substituted by two OH groups, 2,3-epoxypropyl, allyl or benzyl,
$R^3$ is identical with or different from $R^2$ and has the meanings indicated under $R^2$ and additionally represents $C_3$- to $C_{21}$-alkoxyalkyl or dimethylamino-$C_2$- to -$C_5$-alkyl or diethylamino-$C_2$- to -$C_5$-alkyl, or, together with the N atom linking them,
$R^2$ and $R^3$ represent a pyrrolidine ring or a piperidine, morpholine or hexamethyleneimine ring which is unsubstituted or substituted by up to four $C_1$- to $C_4$-alkyl groups,
r, s and t represent identical or different integers from 2 to 6 and
v represents an integer from 0 to 3,
$R^4$ and $R^5$ are identical or different radicals having the meanings indicated under $R^2$ and
T is a group of the formula (VI)

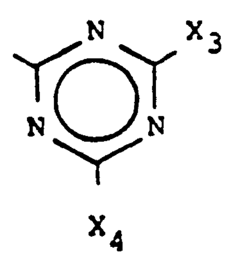

(VI)

in which
$X_3$ and $X_4$ are identical or different radicals of the formulae (II) or (IV) and
$R^6$ represents one of the radicals listed under $R^2$,
$R^1$ has the meaning of one of the radicals listed under $R^2$,
Y is hydrogen, a $C_1$- to $C_{18}$-aliphatic acyl group which can be substituted by -OH or -Cl, a $C_5$- to $C_{12}$-alicyclic acyl radical which can be substituted by -OH or $C_1$- to $C_4$-alkyl, a $C_6$- or $C_{10}$-aromatic acyl or sulphonyl radical which can be substituted by -OH, $C_1$- to $C_4$-alkoxy, halogen or $-NH_2$, a $C_7$- to $C_{16}$-araliphatic acyl radical which can be substituted by -OH and/or 1 or 2 $C_1$- to $C_4$-alkyl groups, or a $C_1$- to $C_{18}$-alkyl group, a $C_5$- to $C_{12}$-cycloalkyl group or a phenylcarbamoyl or naphthylcarbamoyl group which can be substituted by halogen or $C_1$- to $C_4$-alkyl, and
$X_2$ as a terminal group is halogen or a radical of the formulae

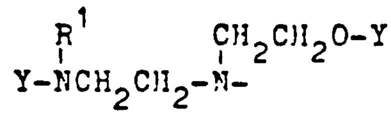

or

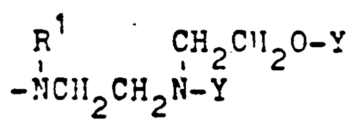

,

in which $R^1$ and Y have the meanings indicated above, A as a terminal group is H or Y having the meanings indicated above, and at least one radical of the formula (V) must be present in formula (I).

2. A process for the preparation of the polytriazinyl compounds of the formula (I) in claim 1, which comprises

A. reacting, in a process stage A, a cyanuric halide with a 0.95 to 1.05 times molar quantity of a compound of the formula $H\text{-}X_1$ in which $X_1$ has the meaning indicated in claim 1, but is not halogen or phenyl, in the presence of an inert organic solvent and at -5 to 40°C to give a compound of the formula

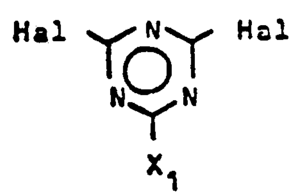

B. subjecting the products obtained in process stage A to a polycondensation reaction with a 0.95 to 2.05 times molar quantity of a compound of the formula VII

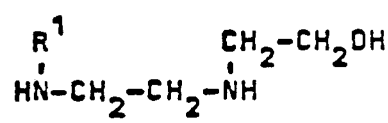

(VII)

in the presence of an inert organic solvent and at 50 to 200°C in a process stage B, to give a product of the formula (Ia)

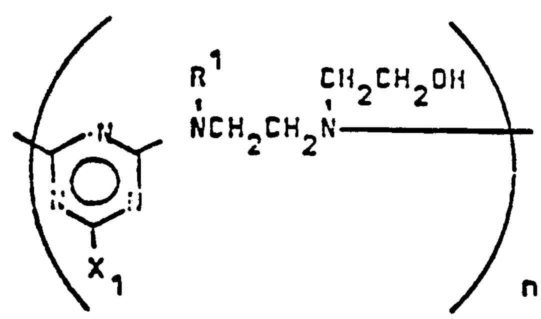

(Ia)

- carrying out all the reactions relating to the replacement of halogen in the presence of equivalent quantities of a hydrogen halide acceptor - and then, if desired, converting the compounds (Ia) obtained in accordance with A and B, respectively, into derivatives in accordance with methods which are known per se by reaction with a quantity of an isocyanate or ester which is equivalent to the free OH groups in these compounds.

3. The use of the compounds as claimed in claim 1 for stabilizing synthetic polymers.

4. Use as claimed in claim 3, wherein the polymer is a polyolefin, a polyacrylate or polymethacrylate or a homopolymer or copolymer of styrene.

5. A process for stabilizing synthetic polymers against the harmful effects of light, which comprises adding to the polymers, if appropriate together with already known substances having a stabilizing action, 0.01 to 5 parts by weight, relative to the polymer, of a stabilizer as claimed in claim 1.

6. Synthetic polymers which have been stabilized against decomposition by UV light and which contain 0.01 to 5 parts by weight, relative to the polymer, of a stabilizer as claimed in claim 1.

**Claims** for the Contracting States: AT

1. A process for the preparation of a polytriazinyl compound of the formula (I)

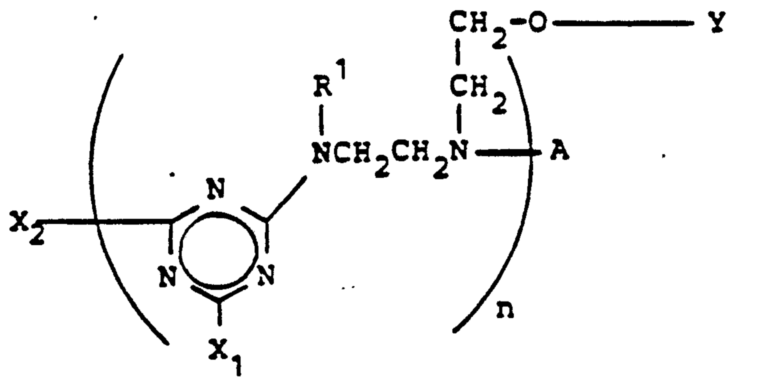

(I)

in which
n is an integer from > 1 to 100 and
$X_1$ represents halogen phenyl or a group of the formula (II), (III) or (IV)

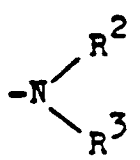

(II),

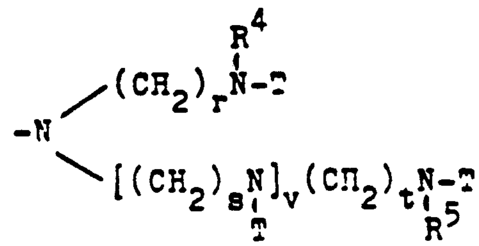

(III)

$-OR^6$ (IV)

in which formulae
$R^2$ is hydrogen, $C_1$- to $C_{18}$-alkyl, $C_5$- to $C_{12}$-cycloalkyl which can be substituted by a $C_1$- to $C_4$-alkyl group, $C_3$- to $C_{12}$-alkenyl, or phenyl which can be substituted by one or two Cl or by one or two $C_1$- to $C_4$-alkyl groups or by $C_1$- to $C_4$-alkoxy or $C_1$- to $C_2$-carboalkoxy, or is $C_7$- to $C_{14}$-phenylalkyl or a group of the formula (V)

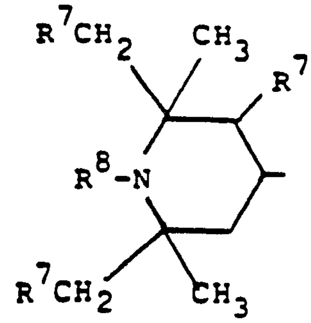

(V)

in which
$R^7$ = hydrogen or methyl and
$R^8$ = hydrogen, $C_1$- to $C_4$-alkyl which can be substituted by one OH group or, in the case of $C_3$-alkyl, can also be substituted by two OH groups, 2,3-epoxypropyl, allyl or benzyl,
$R^3$ is identical with or different from $R^2$ and has the meanings indicated under $R^2$ and additionally represents $C_3$- to $C_{21}$-alkoxyalkyl or dimethylamino-$C_2$- to -$C_5$-alkyl or diethylamino-$C_2$- to -$C_5$-alkyl, or, together with the N atom linking them,
$R^2$ and $R^3$ represent a pyrrolidine ring or a piperidine, morpholine or hexamethyleneimine ring which is unsubstituted or substituted by up to four $C_1$- to $C_4$-alkyl groups,
r, s and t represent identical or different integers from 2 to 6 and
v represents an integer from 0 to 3,
$R^4$ and $R^5$ are identical or different radicals having the meanings indicated under $R^2$ and
T is a group of the formula (VI)

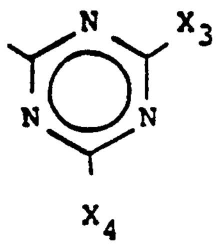

(VI)

in which
$X_3$ and $X_4$ are identical or different radicals of the formulae (II) or (IV) and
$R^6$ represents one of the radicals listed under $R^2$,
$R^1$ has the meaning of one of the radicals listed under $R^2$,
Y is hydrogen, a $C_1$- to $C_{18}$-aliphatic acyl group which can be substituted by -OH or -Cl, a $C_5$- to $C_{12}$-alicyclic acyl radical which can be substituted by -OH or $C_1$- to $C_4$-alkyl, a $C_6$- or $C_{10}$-aromatic acyl or sulphonyl radical which can be substituted by -OH, $C_1$- to $C_4$-alkoxy, halogen or $-NH_2$, a $C_7$- to $C_{16}$-araliphatic acyl radical which can be substituted by -OH and/or 1 or 2 $C_1$- to $C_4$-alkyl groups, or a $C_1$- to $C_{18}$-alkyl group, a $C_5$- to $C_{12}$-cycloalkyl group or a phenylcarbamoyl or naphthylcarbamoyl group which can be substituted by halogen or $C_1$- to $C_4$-alkyl, and
$X_2$ as a terminal group is halogen or a radical of the formulae

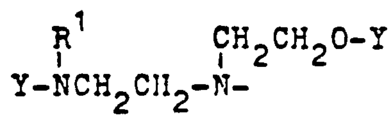

or

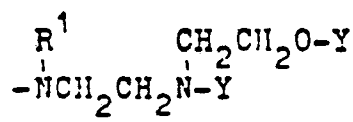

,

in which $R^1$ and Y have the meanings indicated above, A as a terminal group is H or Y having the meanings indicated above, and at least one radical of the formula (V) must be present in formula (I), which comprises

A. reacting, in a process stage A, a cyanuric halide with a 0.95 to 1.05 times molar quantity of a compound of the formula $H\text{-}X_1$ in which $X_1$ has the meaning indicated in claim 1, but is not halogen or phenyl, in the presence of an inert organic solvent and at -5 to 40°C to give a compound of the formula

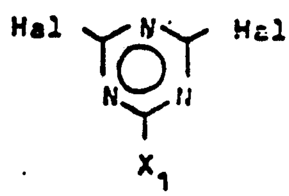

B. subjecting the products obtained in process stage A to a polycondensation reaction with a 0.95 to 2.05 times molar quantity of a compound of the formula VII

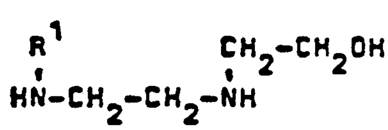

(VII),

in the presence of an inert organic solvent and at 50 to 200°C in a process stage B, to give a product of the formula (Ia)

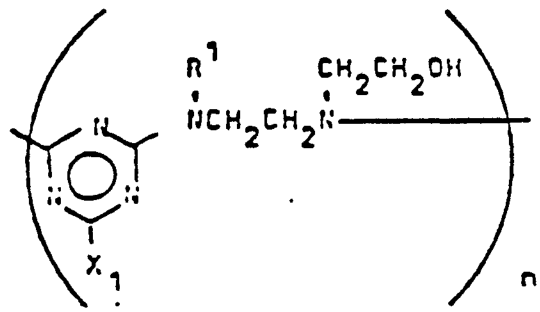

(Ia)

- carrying out all the reactions relating to the replacement of halogen in the presence of equivalent quantities of a hydrogen halide acceptor - and then, if desired, converting the compounds (Ia) obtained in accordance with A and B, respectively, into derivatives in accordance with methods which are known per se by reaction with a quantity of an isocyanate or ester which is equivalent to the free OH groups in these compounds.

2. The use of the compounds prepared as claimed in claim 1 for stabilizing synthetic polymers.

3. Use as claimed in claim 3, wherein the polymer is a polyolefin, a polyacrylate or polymethacrylate or a homopolymer or copolymer of styrene.

4. A process for stabilizing synthetic polymers against the harmful effects of light, which comprises adding to the polymers, if appropriate together with already known substances having a stabilizing action, 0.01 to 5 parts by weight, relative to the polymer, of a stabilizer prepared as claimed in claim 1.

5. Synthetic polymers which have been stabilized against decomposition by UV light and which contain 0.01 to 5 parts by weight, relative to the polymer, of a stabilizer prepared as claimed in claim 1.

**Revendications** pour les Etats Contractants: BE, CH, DE, FR, GB, IT, LI, NL, SE

1. Composés polytriazinyliques qui répondent à la formule I:

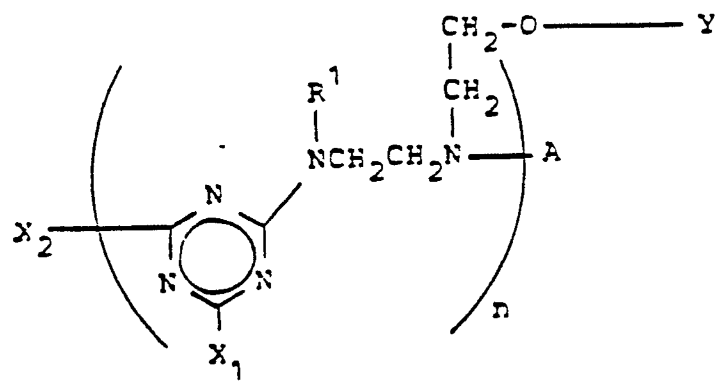

(I)

dans laquelle:

n représente un nombre entier supérieur à 1 et au plus égal à 100,

$X_1$ représente un halogène, un phényle ou un radical répondant à l'une des formules II, III et IV:

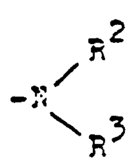

(II),

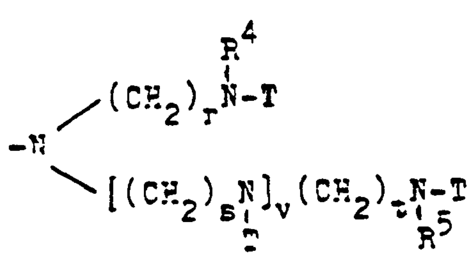

(III)

$-OR^6$ (IV)

formules dans lesquelles:

$R^2$ représente l'hydrogène, un alkyle en $C_1$-$C_{18}$, un cycloalkyle en $C_5$-$C_{12}$, éventuellement porteur d'un alkyle en $C_1$-$C_4$, un alcényle en $C_3$-$C_{12}$, un phényle, éventuellement porteur d'un ou deux Cl ou d'un ou deux alkyles en $C_1$-$C_4$, un alcoxy en $C_1$-$C_4$, un alcoxycarbonyle en $C_1$ ou $C_2$, un phénylalkyle en $C_7$-$C_{14}$ ou un radical de formule V:

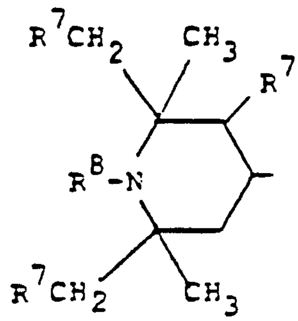

(V)

dans lequel:

$R^7$ représente l'hydrogène ou un méthyle et

$R^8$ représente l'hydrogène, un alkyle en $C_1$-$C_4$, éventuellement porteur d'un -OH ou encore, s'il s'agit d'un alkyle en $C_3$, de deux OH, un époxy-2,3 propyle, un allyle ou un benzyle, $R^3$ est identique ou différent de $R^2$ et a l'une des significations qui ont été données pour $R^2$, $R^3$ pouvant en outre représenter un ($C_3$-$C_{21}$-alcoxy)-alkyle ou un diméthylamino- ou diéthylamino-($C_2$-$C_5$-alkyle),

ou

$R^2$ et $R^3$ forment ensemble, et avec l'atome d'azote qui les unit, un cycle de pyrrolidine ou un cycle de pipéridine, de morpholine ou d'hexaméthylèneimine non substitué ou portant au plus 4 alkyles en $C_1$-$C_4$,

r, s et t représentent chacun, indépendamment les uns des autres, un nombre entier de 2 à 6,

v représente un nombre de 0 à 3,

$R^4$ et $R^5$ représentent des radicaux, identiques ou différents, qui ont les significations indiquées pour $R^2$,

T représente un radical de formule VI:

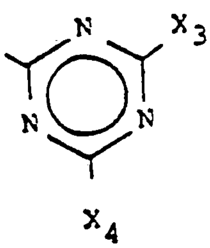

(VI)

dans lequel $X_3$ et $X_4$ représentent des radicaux identiques ou différents répondant à la formule II ou à la formule IV,

et

$R^6$ représente l'un des radicaux qui ont été mentionnés à propos de $R^2$,

$R^1$ représente l'un des radicaux qui ont été mentionnés à propos de $R^2$,

Y représente l'hydrogène, un radical acyle aliphatique en $C_1$-$C_{18}$, éventuellement porteur d'un -OH ou d'un -Cl, un radical acyle alicyclique en $C_5$-$C_{12}$, éventuellement porteur d'un -OH ou d'un alkyle en $C_1$-$C_4$, un radical acyle ou sulfonyle aromatique en $C_6$ ou $C_{10}$, éventuellement porteur d'un -OH, d'un alcoxy en $C_1$-$C_4$, d'un halogène ou d'un -$NH_2$, un radical acyle araliphatique en $C_7$-$C_{16}$, éventuellement porteur d'un -OH et/ou d'un ou deux alkyles en $C_1$-$C_4$, ou un radical ($C_1$-$C_{18}$-alkyl)-, ($C_5$-$C_{12}$-cycloalkyl)-, phényl- ou naphtyl-carbamoyle, éventuellement porteur d'un halogène ou d'un alkyle en $C_1$-$C_4$,

$X_2$ représente, en tant que radical terminal, un halogène ou un radical répondant à l'une des formules:

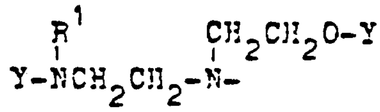

et

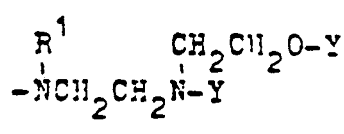

dans lesquelles $R^1$ et Y ont les significations précédemment données,

et

A représente, en tant que radical terminal, l'hydrogène ou un radical ayant l'une des significations qui ont été données ci-dessus pour Y,
les composés de formule I devant contenir au moins un radical de formule V.

2. Procédé pour préparer les composés polytriazinyliques de formule I selon la revendication 1, procédé caractérisé en ce qu'on effectue, en présence d'un solvant organique inerte, les étapes opératoires suivantes:

A. dans une étape opératoire A on fait réagir 1 mol d'un halogénure de cyanuryle avec de 0,95 à 1,05 mol d'un composé de formule $H\text{-}X_1$ dans lequel $X_1$ a la signification donnée à la revendication 1 mais ne peut représenter ni un halogène ni un phényle, à une température de -5 à 40°C, réaction qui conduit à un composé de formule:

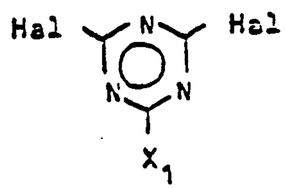

B. dans une étape opératoire B on polycondense, à une température de 50 à 200°C, 1 mol du produit obtenu à l'étape A, avec de 0,95 à 2,05 mol d'un composé de formule VII:

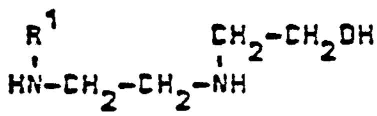

(VII)

de manière à obtenir un produit répondant à la formule Ia:

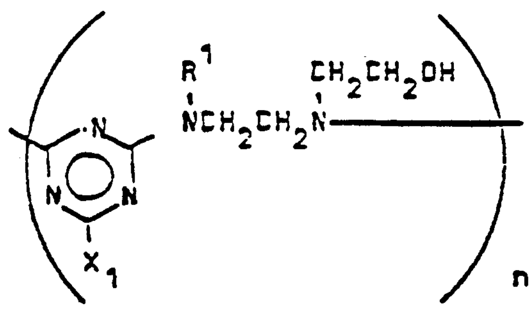

(Ia)

(toutes les réactions qui concernent le remplacement d'un halogène sont exécutées en présence d'une quantité équivalente d'un accepteur d'halogénure d'hydrogène) et ensuite, si on le désire, on transforme en dérivés, par des méthodes connues, les composés (Ia) obtenus selon A ou B en les faisant réagir avec une quantité équivalente, relativement à leurs radicaux -OH libres, d'un isocyanate ou d'un ester.

3. Application des composés selon la revendication 1, pour la stabilisation de polymères synthétiques.

4. Application selon la revendication 3, caractérisée en ce que le polymère est une polyoléfine, un polyacrylate, un polyméthacrylate, ou un homopolymère ou copolymère du styrène.

5. Procédé pour stabiliser des polymères synthétiques contre les effets destructeurs de la lumière, procédé caractérisé en ce qu'on ajoute aux polymères, éventuellement en plus de stabilisants connus, de 0,01 à 5 parties en poids, par rapport aux polymères, d'un stabilisant selon la revendication 1.

6. Polymères synthétiques stabilisés contre la décomposition par les rayons ultra-violets, polymères qui contiennent de 0,01 à 5 parties en poids, par rapport aux polymères, d'un stabilisant selon la revendication 1.

**Revendications** pour l'Etat Contractant: AT

1. Procédé pour préparer des composés polytriaziniques répondant à la formule I:

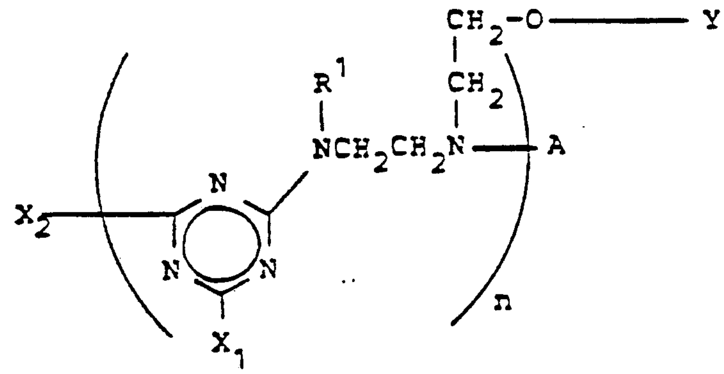

(I)

dans laquelle:

n représente un nombre entier supérieur à 1 et au plus égal à 100,

$X_1$ représente un halogène, un phényle ou un radical répondant à l'une des formules II, III et IV:

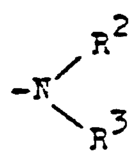

(II),

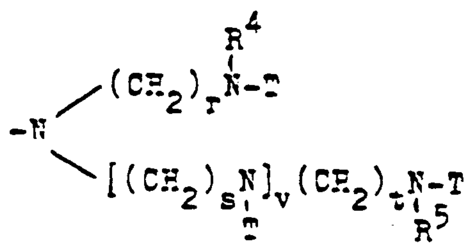

(III)

$-OR^6$ (IV)

formules dans lesquelles:

$R^2$ représente l'hydrogène, un alkyle en $C_1$-$C_{18}$, un cycloalkyle en $C_5$-$C_{12}$, éventuellement porteur d'un alkyle en $C_1$-$C_4$, un alcényle en $C_3$-$C_{12}$, un phényle, éventuellement porteur d'un ou deux Cl ou d'un ou deux alkyles en $C_1$-$C_4$, un alcoxy en $C_1$-$C_4$, un alcoxycarbonyle en $C_1$ ou $C_2$, un phénylalkyle en $C_7$-$C_{14}$ ou un radical de formule V:

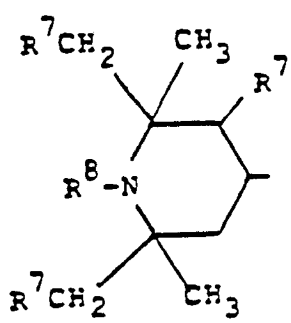

(V)

dans lequel:

$R^7$ représente l'hydrogène ou un méthyle et

$R^8$ représente l'hydrogène, un alkyle en $C_1$-$C_4$, éventuellement porteur d'un -OH ou encore, s'il s'agit d'un alkyle en $C_3$, de deux OH, un époxy-2,3 propyle, un allyle ou un benzyle, $R^3$ est identique ou différent de $R^2$ et a l'une des significations qui ont été données pour $R^2$, $R^3$ pouvant en outre représenter un ($C_3$-$C_{21}$-alcoxy)-alkyle ou un diméthylamino- ou diéthylamino-($C_2$-$C_5$-alkyle),

ou

$R^2$ et $R^3$ forment ensemble, et avec l'atome d'azote qui les unit, un cycle de pyrrolidine ou un cycle de pipéridine, de morpholine ou d'hexaméthylèneimine non substitué ou portant au plus 4 alkyles en $C_1$-$C_4$,

r, s et t représentent chacun, indépendamment les uns des autres, un nombre entier de 2 à 6,

v représente un nombre de 0 à 3,

$R^4$ et $R^5$ représentent des radicaux, identiques ou différents, qui ont les significations indiquées pour $R^2$,

T représente un radical de formule VI:

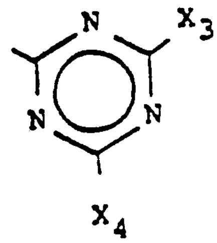

(VI)

dans lequel $X_3$ et $X_4$ représentent des radicaux identiques ou différents répondant à la formule II ou à la formule IV,
et

$R^6$ représente l'un des radicaux qui ont été mentionnés à propos de $R^2$,

$R^1$ représente l'un des radicaux qui ont été mentionnés à propos de $R^2$,

Y représente l'hydrogène, un radical acyle aliphatique en $C_1$-$C_{18}$, éventuellement porteur d'un -OH ou d'un -Cl, un radical acyle alicyclique en $C_5$-$C_{12}$, éventuellement porteur d'un -OH ou d'un alkyle en $C_1$-$C_4$, un radical acyle ou sulfonyle aromatique en $C_6$ ou $C_{10}$, éventuellement porteur d'un -OH, d'un alcoxy en $C_1$-$C_4$, d'un halogène ou d'un $-NH_2$, un radical acyle araliphatique en $C_7$-$C_{16}$, éventuellement porteur d'un -OH et/ou d'un ou deux alkyles en $C_1$-$C_4$, ou un radical ($C_1$-$C_{18}$-alkyl)-, ($C_5$-$C_{12}$-cycloalkyl)-, phényl- ou naphtyl-carbamoyle, éventuellement porteur d'un halogène ou d'un alkyle en $C_1$-$C_4$,

$X_2$ représente, en tant que radical terminal, un halogène ou un radical répondant à l'une des formules:

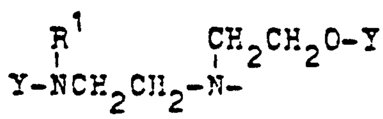

et

et

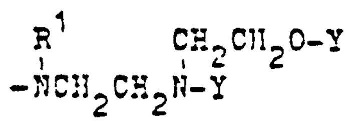

,

dans lesquelles $R^1$ et Y ont les significations précédemment données,
et

A représente, en tant que radical terminal, l'hydrogène ou un radical ayant l'une des significations qui ont été données ci-dessus pour Y,
les composés de formule I devant contenir au moins un radical de formule V,
procédé caractérisé en ce qu'on effectue, en opérant dans un solvant organique inerte, les étapes opératoires suivantes:

A. dans une étape opératoire A on fait réagir 1 mol d'un halogénure de cyanuryle avec de 0,95 à 1,05 mol d'un composé de formule $H$-$X_1$ dans lequel $X_1$ a la signification donnée à la revendication 1 mais ne peut représenter ni un halogène ni un phényle, à une température de -5 à 40°C, réaction qui conduit à un composé de formule:

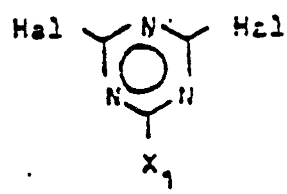

B. dans une étape opératoire B on polycondense, à une température de 50 à 200°C, 1 mol du produit obtenu à l'étape A, avec de 0,95 à 2,05 mol d'un composé de formule VII:

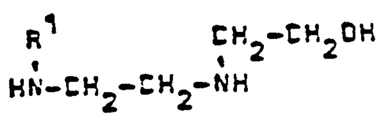

(VII)

de manière à obtenir un produit répondant à la formule Ia:

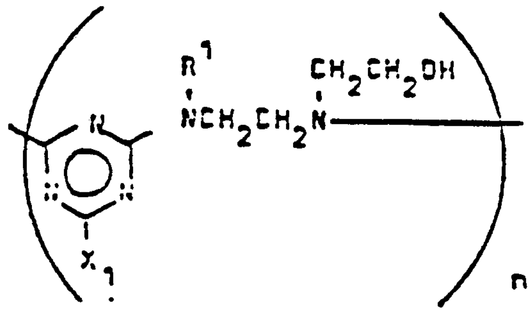

(Ia)

(toutes les réactions qui concernent le remplacement d'un halogène sont exécutées en présence d'une quantité équivalente d'un accepteur d'halogénure d'hydrogène) et ensuite, si on le désire, on transforme en dérivés, par des méthodes connues, les composés (Ia) obtenus selon A ou B en les faisant réagir avec une quantité équivalente, relativement à leurs radicaux -OH libres, d'un isocyanate ou d'un ester.

2. Application des composés préparés selon la revendication 1 à la stabilisation de polymères synthétiques.

3. Application selon la revendication 2 caractérisée en ce que le polymères est une polyoléfine, un polyacrylate, un polyméthacrylate, ou un homopolymère ou copolymère du styrène.

4. Procédé pour stabiliser des polymères synthétiques contre les effets destructeurs de la lumière, procédé caractérisé en ce qu'on ajoute aux polymères, éventuellement en plus de stabilisants connus, de 0,01 à 5 parties en poids, par rapport aux polymères, d'un stabilisant préparé selon la revendication 1.

5. Polymères synthétiques stabilisés contre le décomposition par les rayons ultra-violets, polymères qui contiennent de 0,01 à 5 parties en poids, par rapport aux polymères, d'un stabilisant qui a été préparé selon la revendication 1.